# EUROPEAN PATENT SPECIFICATION

(11) **EP 0 614 939 B1**
(45) Date of publication and mention of the grant of the patent: **04.02.1998**
(21) Application number: 94103732.7
(22) Date of filing: 11.03.1994
(51) Int. Cl.: C08L 23/10, C08K 5/3435, C08K 5/00

(54) **Polypropylene resin composition resistant to high energy radiation**
Gegen hochenergetische Strahlung beständige Polypropylenzusammensetzung
Composition de résine polypropylène résistante aux rayons à haute énergie

(30) Priority: 12.03.1993 KR 9303791
(43) Date of publication of application: 14.09.1994
(73) Proprietor: YUKONG LIMITED, Yongdungpo-gu, Seoul (KR)
(72) Inventor: Yoo, Yong-deuk, Nowon-gu, Seoul (KR); Jung, Sang-hee, Nam-gu, Inchon (KR); Seo, Jae-yoon, Namdong-gu, Inchon (KR)
(74) Representative: Lins, Edgar, Dipl.-Phys. Dr.jur.

(56) References cited:
- EP-A- 0 310 100
- EP-A- 0 426 852

## Description

### BACKGROUND OF THE INVENTION

### Field of the invention

The present invention relates, in general, to a polypropylene resin composition resistant to high energy radiation and, more particularly, to a resin composition containing isotactic polypropylene inhibiting the degradation caused by irradiation.

### Description of the Prior Art

Polypropylene is an exemplary stereoregular polymer, and its properties are affected by molecular weight, distribution of molecular weight, stereoregularity and the like. Stereoregular polymers are grouped into atactic polymers, syndiotactic polymers and isotactic polymers. Among these stereoregular polymers, only isotactic polymers are commercially available.

In an isotactic polypropylene, all methyl groups are arranged in either above or below side of the plane including a main chain, so that it has a high melting point and superior mechanical properties including thermal resistance. Accordingly, commercially available polypropylenes are all subjected to this type. However, in general, the isotactic polypropylene partially includes atactic polymers therein and thus, since the isotactic polymer has a great influence on the physical properties, the ratio of isotactic polymer is very important in polypropylene. As the ratio of isotactic polymer is higher, the crystallinity and hardness of polypropylene are enhanced with the melting point high. The commercially manufactured polypropylene has isotactic indexes ranging from 90 to 99 %.

Dr. Ziegler succeeded in commercially manufacturing polypropylene in 1953, using a Ziegler catalyst (Al(C₂H₄)₃ + TiCl₄) developed by himself. However, the polypropylene of Ziegler, which has a rubber phase without stereoregularity, is an atactic polymer with little commercial value.

In 1955, Dr. Natta developed a Ziegler-Natta catalyst (Al(C₂H₄)₃ + TiCl₃), which is more improved than the Ziegler catalyst and established a slurry polymerization process for polypropylene in the first time in the world. Using the Ziegler-Natta catalyst, he produced isotactic polypropylenes superior in crystallinity, thermal resistance and mechanical properties and obtained a commercial success. Thenceforth, world-prominent chemical companies, such as Hercules of U.S.A., ICI of Britain, Mitsui Toatsu of Japan and the like employ the process of slurry polymerization. Since then, a number of companies have developed catalysts for the preparation of polypropylene, so that a slurry polymerization process, a solventless slurry process and a gas polymerization process ware established.

The polypropylenes prepared by such processes have been applied to many uses by virtue of a substantial crystalline content. For example, since polypropylenes generally have the contact clarity, heat distortion resistance and low chemical reactivity, they are used in manufacturing food bowls, packaging films, household electric appliances and, especially, in molding medical instruments, such as syringes and blood/nutrients transfusion sets.

Obviously, before any such medical instruments can be safely used, it is required that they be sterilized. Ethylene oxide has the sterilizing effectiveness for the medical instruments, and has been regarded in the past as generally safe. Recently, however, ethylene oxide has come under increasing scrutiny by the authorities, since it is believed to be a mutagen and possibly a carcinogen. Because ethylene oxide is in a gas phase, it is dangerous when it is leaked during the sterilization. What is worse, if the gas remains in the groove portions of the medical instruments, human bodies are fatally damaged. Acceptable limits of residual ethylene oxide and its by-products have, therefore, been lowered. In addition, the cost of ethylene oxide is rising and the sterilizing costs are becoming non-competitive.

High energy radiation obtained from cobalt 60, on the other hand, leaves no residue and shows immediate sterilization. However unlike ethylene oxide, radiation, especially gamma radiation, damages the polymer in that it causes embrittlement, discoloration or decrease of tensile elongation or all of these effects occurs simultaneously.

In an effort to solve the problems, many polypropylene resin compositions have been suggested. For example, U.S. Patent No. 4,666,959 assigned to El Paso Products Company discloses that a composition is comprised of a propylene polymer with small amounts of a specific amine compound, a phosphite compound and a phenolic antioxidant. However, Weston 619 used as the phosphite in the patent effects hydrolysis during the molding of the composition, deteriorating the physical properties of the articles made thereof. Since the degree of discoloration is very large before and after radiation, the article made thereof are not commercially available. What is worse, human bodies may be damaged by the residues of the peroxide which is used in the composition to enhance the melt index.

Besides, many propylene polymer compositions are proposed in many patents. For example, a propylene polymer composition is disclosed in U.S. Patent No. 4,888,369 to Himont Incorporated, which comprises various amine compounds, a phenolic compound and a phosphorous containing compound. In U.S. Patent No. 5,041,483 assigned to Hercules Incorporated, there is proposed a polypropylene composition preventive of odor generation during gamma-irradiation. U.S. Patent No. 4,569,736 assigned to Terumo Ltd. of Japan claims a polypropylene composition comprising a low molecular weight amine compound and an antioxidant.

However, the above conventional polypropylene compositions have a problem in that the physical properties are profoundly lowered when irradiating gamma rays.

### SUMMARY OF THE INVENTION

Therefore, an object of the present invention is to solve the above problems encountered in the prior art and to provide a polypropylene composition which is resistant to degradation of physical properties and discoloration and keeps consistent physical properties upon high energy radiation.

In accordance with the present invention, the above object can be accomplished by providing a polypropylene composition comprising a mixture consisting essentially of from 95 to 99.6 % by weight of a polypropylene, from 0.01 to 1.0 % by weight of a phosphorous antioxidant, from 0.01 to 2.0 % by weight of a phenolic antioxidant and from 0.01 to 2.0 % by weight of an amine light stabilizer.

These and other objects and advantages of the present invention will be more apparent as following description proceeds.

### DETAILED DESCRIPTION OF THE INVENTION

As a polypropylene used in the present invention, there is employed an isotactic polypropylene. Isotactic polypropylenes have been conventionally prepared by use of a Ziegler-Natta catalyst. On the other hand, the isotactic polypropylenes used in the composition of the present invention are prepared, using a magnesium chloride-supported catalyst with high activity.

Small amounts of a propylene monomer, a magnesium chloride-supported high active catalyst, a triethyl aluminum co-catalyst and a cyclohexylmethylmethoxy silane donor are primarily input at a temperature of 8 to 12 °C, preferably 10 °C, to carry out pre-polymerization. Thereafter, the catalyst and the donor are added to the prepolymer and, in order to supply hydrogens to the intramolecule of the pre-polymer, hydrogens are added additionally. Isotactic polypropylenes are prepared in a loop reactor.

Preferably, the polypropylenes prepared have isotactic indexes ranging from 92 to 98 %. For example, a polypropylene which is out of the range has a low melting point and is degraded in general physical properties, so that there occurs a problem in that it may be not commercially used.

As a propylene polymer suitable to the present invention, there may be used a homopolypropylene, which consists of sole propylene monomers or a random polypropylene, wherein ethylene monomers and propylene monomer are randomly arranged in the main chain thereof. In case of random polypropylene, ethylene monomers are contained in amounts ranging from 0.5 to 8.0 % by weight, based on the weight of the polypropylene and preferably from 1 to 6 % by weight.

According to the present invention, the polypropylene may further comprise an α-olefin copolymer containing at least 4 carbon atoms in an amount of not more than 30 % by weight and preferably not more than 20 % by weight. The polypropylene containing the α-olefin copolymer is improved in an aspect of physical properties. A comonomer used to prepare the α-olefin containing at least 4 carbon atoms is selected from the group consisting of butene-1, pentene-1, hexene-1, heptene-1, octene-1 and the mixture thereof, such as butene-1/octene-1 or butene-1/hexene-1.

In accordance with the present invention, a specific phosphorous antioxidant, a phenolic antioxidant and an amine light stabilizer are contained in the polypropylene resistant to high energy radiation. The use of these additives prevents degradation of physical properties caused by radiation and heat.

Many antioxidants and light stabilizers are commercially available, and the antioxidants and the light stabilizer used in the present invention are as follow.
1. Light Stabilizer of Amine : the amount thereof is on the order of 0.01 to 2.0 % by weight, based on the total weight of the composition, and it has the following structural formula I: 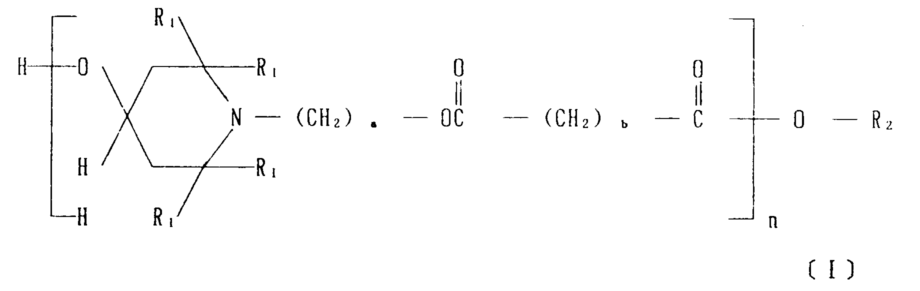 wherein,
   R₁ and R₂, independently from each other, are an alkyl group containing 1 to 4 carbon atoms;
   a and b may be different or the same and is an integer of from 2 to 5; and
   n is an integer of 5 to 20,
   or the following structural formula II 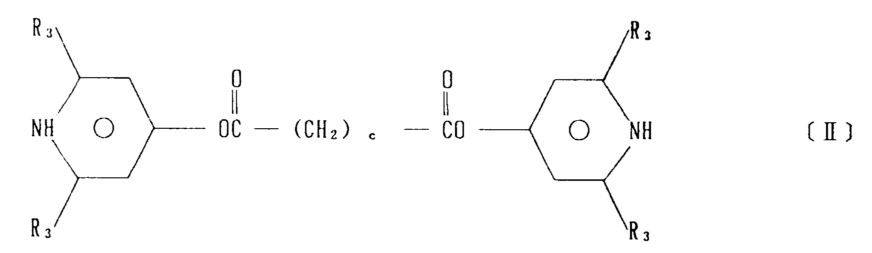 wherein,
   R₃ is an alkyl group containing 1 to 5 carbon atoms; and c is an integer of 1 to 10.
2. Phenolic Antioxidant : the amount thereof is on the order of 0.01 to 2.0 % by weight, based on the total weight of the composition, and it has the following structural formula III: 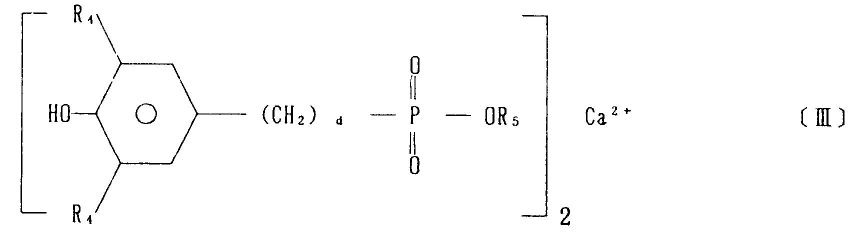 wherein,
   R₄ is an alkyl group containing 1 to 5 carbon atoms;
   R₅ is an alkyl group containing 2 to 5 carbon atoms, being different or the same as R₄; and
   d is an integer of 2 to 4.
3. Phosphorous Antioxidant : the amount thereof is on the order of 0.01 to 1.0 % by weight, based on the total weight of the composition, and it has the following structural formula IV: 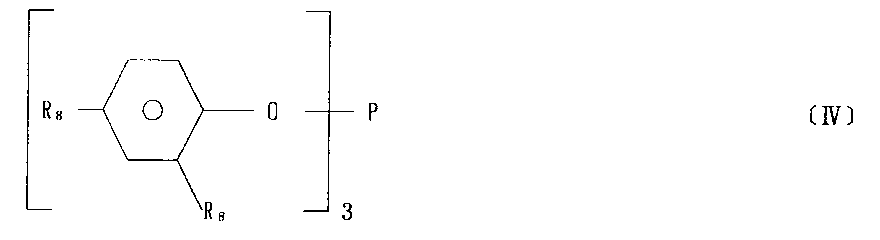 wherein, R₈ is an alkyl containing 1 to 5 carbon atoms.

Among the amine light stabilizers used in the present invention, preferred are those wherein R₁ is a methyl group, a and b are both 2 and n is an integer of 5 to 20, or R₃ is a t-butyl group and c is 8. Such compounds are commercially available. The amine light stabilizers are preferably added to the polymer in amounts ranging from 0.1 to 0.5 % by weight.

Preferred phenolic antioxidant used in the present invention has R₄ of t-butyl, R₅ of ethyl and d of 1, and the amount thereof is preferably on the order of 0.03 to 0.5 % by weight.

Besides the above requisite additives, other additives may be incorporated to the polypropylene composition according to the present invention.

In order to neutralize acidic catalyst residues that were left in polymers after the polymer synthesis, a calcium stearate or an aluminum magnesium hydroxycarbonate may be added in an amount of 0.02 to 0.2 % by weight, based on the weight of the polymer.

To satisfy that disposable medical instruments are to be bright in color and clarified, nucleating agents may be contained in an amount of 0.05 to 1.0 % by weight, based on the weight of the polymer and preferably from 0.05 to 0.5 % by weight. General nucleating agents are represented as following structural formula V: 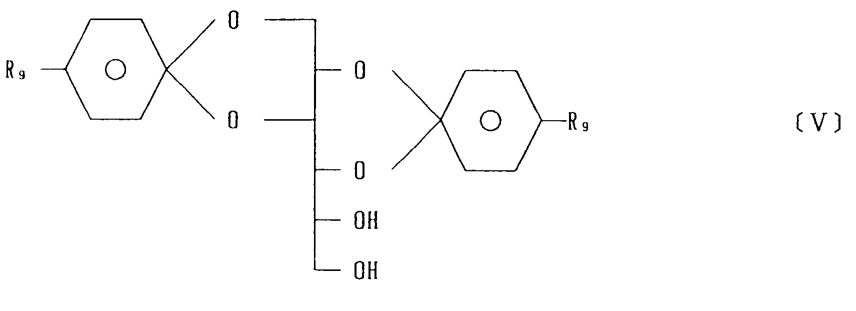 wherein,
R₉ is an alkyl group containing 1 to 5 carbon atoms or a molecule subjected to halogen group.

Without a specific limitation, the resin composition according to the present invention can be prepared in a conventional method, for example, by mixing the requisite additives and the other additives with polypropylene.

Using a mixer, such as a Hensel mixer or a tumbler mixer, the ingredients are merely mixed at below the melting point of polypropylene. Thereafter, a melt mixing is carried out with a single or twin compounder and then, the resulting mixture is subjected to pelletization. Alternatively, before the compounding, the minor ingredients are incorporated in a solvent capable of dissolving the various additives, such as hexane, without a mixer and then, the resulting solution is directly fed into the compounder with a subsidiary supplier and polypropylene resins are added with a main supplier, to make pellets.

Such pellets may be processed by a blow molding and injection method. They may be formed into a series of pipe-shaped articles by extrusion, as well. These pipe-shaped articles are applied to a variety of instruments and bowls for medicine which are to be sterilized by high energy radiation, such as disposable syringes, medical bottles, ointment caps and tools for surgical operation. The polypropylene resin composition according to the present invention can be employed to manufacture containers which are used in inhibiting microorganisms or bacteria harmful to human body, such as food containers, packaging films, drug container and films for retort.

In stead of the high energy radiation provided conveniently by a cobalt 60 source, other radioactive rays can be used, such as X-rays or electric beams. Generally, radiation dosages that can be applied range up to about 5 megarads. For sterilization purposes, it has been found that an article of manufacture such as a syringe can be effectively sterilized by applying 2.5 megarads under gamma radiation.

In order to better understand the nature of the present invention, a number of examples will now be described.

### EXAMPLES 1 to 7

After preparing compositions from the compounds described below in the amount given as shown in the following Table 1, the mixture all was fed into a Hensel mixer and blended at about 50 °C, a below melting point of polypropylene, for 10 minutes. Using a twin screw compounder, pellets were prepared.

The polymer components and the additives used are as follows.
a. As polypropylenes, a homopolypropylene, commercially available from Yukong Ltd. Korea, model name YUPLENE H380F Flake, and a random polypropylene, commercially available from Yukong Ltd., model name YUPLENE R375Y Flake were used. The random polypropylene comprised 2.4 % by weight of ethylene. In the meanwhile, a linear low density polyethylene (LLDPE), commercially available from Yukong Ltd., model name YUCLAIR FU149M was employed as an α-olefin copolymer containing at least 4 carbon atoms.
b. A calcium stearate, commercially available from Witco company was used as a neutralizer for the acidic catalyst residues in the polymer.
c. Model names, Tinuvin 622D and Tinuvin 770DF, commercially available from Ciba-Geigy company were used as light stabilizers.
d. Model name, Irganox B501W, commercially available from Ciba-Geigy company was employed as a phosphorous and phenolic antioxidant.
e. Model name, NC-4, commercially available from Mitsui Toatsu Fine Chemical Ltd., Japan was used as a nucleating agent to improve the clarity of article.

The melt indexes of the polymer in advance of compounding in Examples 1 and 2 were 25 g/10 min. when they were measured at 230 °C under a load of 2.16 kg by the melting fluidity test of KS M 3070 thermoplastic plastic. On the other hand, while that of Example 7 was 6 g/10 min., those of the other Examples were 18 g/10 min.

A specimen was prepared and tested to measure its tensile properties in advance of the irradiation of gamma ray according to a measuring method for the tensile properties of KS M 3006 plastic. After the exposure of the specimen to 2.5 megarads of cobalt 60 gamma radiation, its physical properties were investigated and the results are given as shown in the following Table 1.

Discoloration in a 1 mm sheet before and after the gamma radiation was measured according to a test method for the yellowness and yellow discoloration of KS M 3026 plastic and the results are given as shown in the following Table 1.

A 1 mm sheet was prepared and tested according to a measuring method for the penetrative haze and clarity of ASTM D 1003, to measure its penetrative haze and clarity before and after the gamma radiation, and the results are given as shown in the following Table 1.

**Table 1**

| Ingredients* & Properties | Example No. | | | | | | |
|---|---|---|---|---|---|---|---|
| | 1 | 2 | 3 | 4 | 5 | 6 | 7 |
| Homopolypropylene (YUPLENE H380F Flake) | 99.6 | 99.4 | - | - | - | - | - |
| Random Polypropylene (YUPLENE R375Y Flake) | - | - | 99.6 | 99.4 | 99.6 | 99.45 | 89.6 |
| LLDPE (YUCLAIR FU149M) | - | - | - | - | - | - | 10.0 |
| Calcium stearate | 0.05 | 0.05 | 0.05 | 0.05 | 0.05 | 0.05 | 0.05 |
| Tinuvin 622LD | 0.2 | 0.2 | 0.2 | 0.2 | - | 0.2 | 0.2 |
| Tinuvin 770DF | - | - | - | - | 0.2 | 0.2 | - |
| Irganox B501W | 0.15 | 0.15 | 0.15 | 0.15 | 0.15 | 0.1 | 0.15 |
| NC-4 | - | 0.2 | - | 0.2 | - | - | - |

| Tensile Properties | | | | | | | |
|---|---|---|---|---|---|---|---|
| 0 megrad | | | | | | | |
| Tensile strength (kg/cm²) | 380 | 390 | 300 | 310 | 300 | 300 | 295 |
| Tensile elongation(%) | >500 | >500 | >500 | >500 | >500 | >500 | >500 |
| Degree of Yellowness | 1 | 0 | 0 | -2 | 0 | 1 | 2 |
| Melt index (g/10min) | 25 | 25 | 18 | 18 | 18 | 18 | 6 |
| Haze (%) | 58 | 20 | 49 | 15 | 50 | 47 | 46 |

| 2.5 megarads | | | | | | | |
|---|---|---|---|---|---|---|---|
| Tensile strength (kg/cm²) | 380 | 380 | 310 | 310 | 300 | 290 | 295 |
| Tensile elongation(%) | 400 | 390 | >500 | >500 | >500 | >500 | >500 |
| Degree of Yellowness | 7 | 6 | 5 | 4 | 5 | 8 | 10 |
| Haze (%) | 60 | 21 | 49 | 16 | 55 | 48 | 49 |

| | | | | | | | |
|---|---|---|---|---|---|---|---|
| * % by weight | | | | | | | |

As described hereinbefore, even though an article prepared from the polypropylene composition according to the present invention is irradiated with a gamma ray provided by a cobalt 60 source, it is preventive of embrittlement, discoloration and decrease of tensile elongation and keeps high clarity.

The expression "consisting essentially of" as used in this specification excludes any unrecited substance at a concentration sufficient to substantially adversely affect the essential properties and characteristics of the compositions of matter being defined while permitting the presence of one or more unrecited substances at concentrations insufficient to substantially adversely affect said essential properties and characteristics.

## Claims

1. A polypropylene resin composition resistant to radiation, which comprises a mixture consisting essentially of:
from 95 to 99.6 % by weight of a polypropylene;
from 0.01 to 2.0 % by weight of an amine light stabilizer represented as the following formula I: 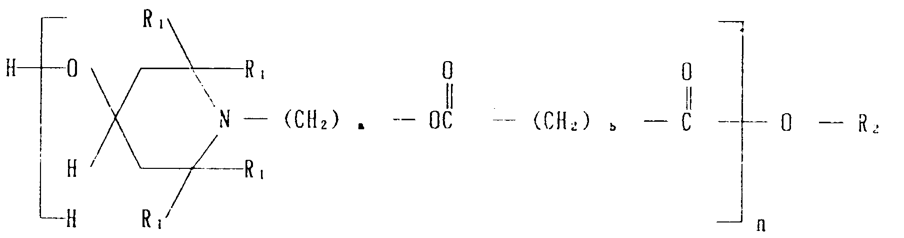 wherein,
R₁ and R₂, independently from each other, are an alkyl group containing 1 to 4 carbon atoms;
a and b may be different or the same and is an integer of from 2 to 5; and
n is an integer of 5 to 20,
or the following structural formula II: 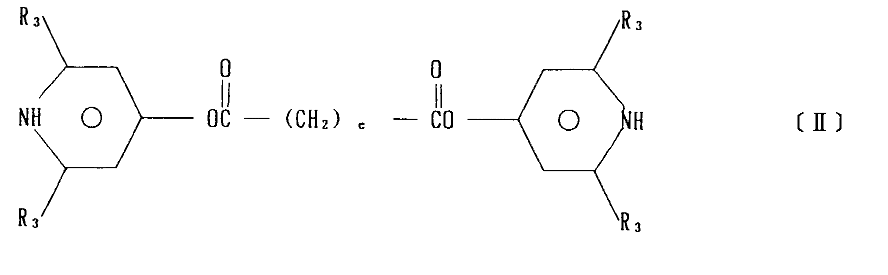 wherein,
R₃ is an alkyl group containing 1 to 5 carbon atoms;
and c is an integer of 1 to 10;
from 0.01 to 2.0 % by weight of a phenolic antioxidant represented as following structural formula III: 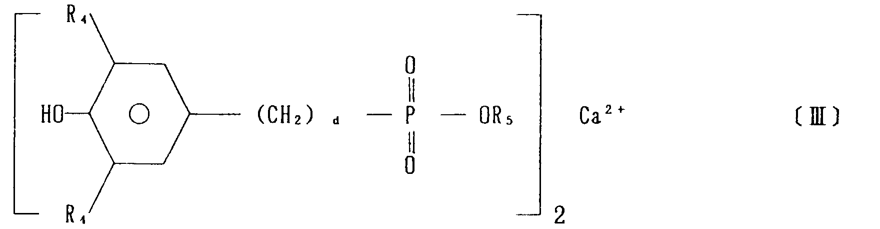 wherein,
R₄ is an alkyl group containing 1 to 5 carbon atoms;
R₅ is an alkyl group containing 2 to 5 carbon atoms, being different or the same as R₄; and
d is an integer of 2 to 4, and
from 0.01 to 1.0 % by weight of a phosphorous antioxidant represented as the following structural formula IV: 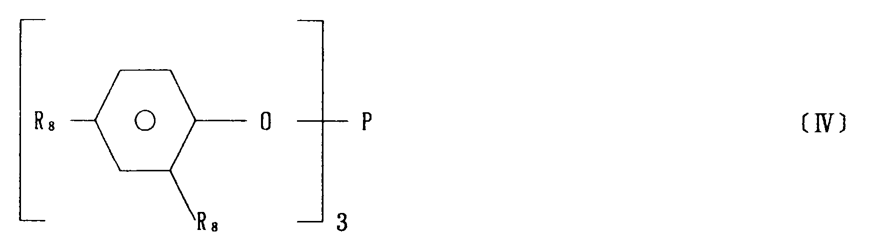 wherein, R₈ is an alkyl containing 1 to 5 carbon atoms.

2. A polypropylene resin composition resistant to radiation according to Claim 1, wherein said polypropylene comprises a homopolypropylene, a random polypropylene or the mixture thereof.

3. A polypropylene resin composition resistant to radiation according to Claim 2, wherein said random polypropylene comprises 0.5 to 8.0 % by weight of ethylene.

4. A polypropylene resin composition resistant to radiation according to Claim 2, further comprising at most 30 % by weight of an α-olefin copolymer containing at least 4 carbon atoms.

5. A polypropylene resin composition resistant tc radiation according to Claim 1, further comprising 0.05 to 1.0 % by weight of a nucleating agent represented as the following structural formula V: 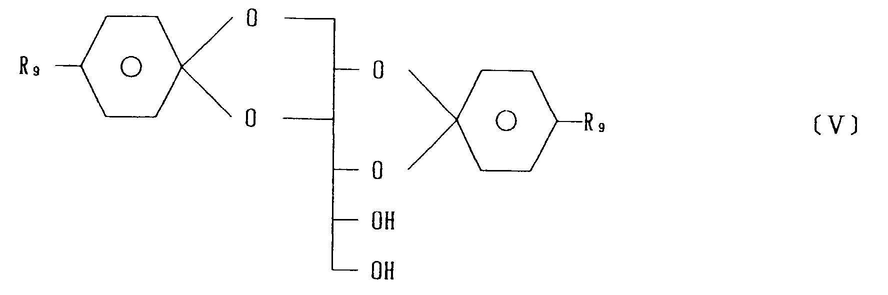 wherein R₉ is an alkyl group containing 1 to 5 carbon atoms or a molecule subjected to halogen group.

## Patentansprüche

1. Gegen Bestrahlung beständige Polypropylenharzzusammensetzung, welche eine Mischung umfaßt, die im wesentlichen besteht aus:
- 95 bis 99,6 Gew.-% eines Polypropylens
- 0,01 bis 2,0 Gew.-% eines Amin-Lichtschutzmittels, wiedergegeben durch die folgende Formel I: 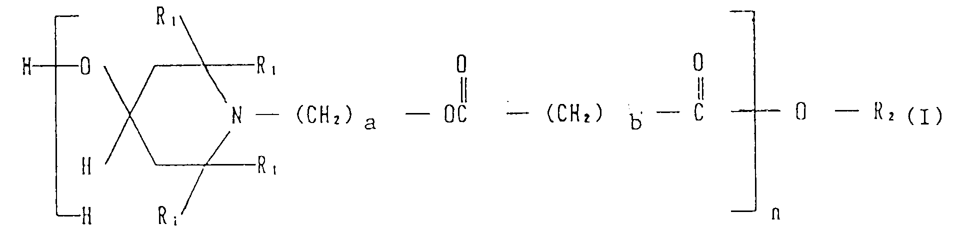 worin R₁ und R₂, unabhängig voneinander, Alkylgruppen mit 1 bis 4 Kohlenstoffatomen sind, a und b verschieden oder gleich sein können und ganze Zahlen von 2 bis 5 sind, und n eine ganze Zahl von 5 bis 20 ist,
oder durch die folgende Strukturfomel II: 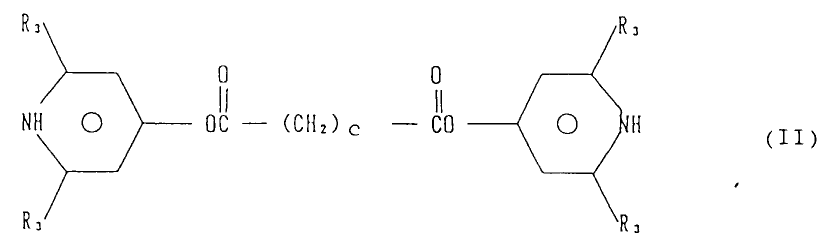 worin R₃ eine Alkylgruppe mit 1 bis 5 Kohlenstoffatomen ist; und c eine ganze Zahl von 1 bis 10 ist;
- 0,01 bis 2,0 Gew.-% eines phenolischen Antioxidationsmittels, wiedergegeben durch die folgende Strukturformel III: 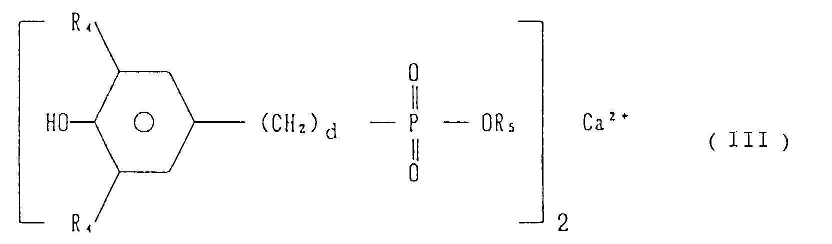 worin R₄ eine Alkylgruppe mit 1 bis 5 Kohlenstoffatomen; R₅ eine Alkylgruppe mit 2 bis 5 Kohlenstoffatomen, verschieden von oder gleich R₄; und d eine ganze Zahl von 2 bis 4 ist und
- 0,01 bis 1,0 Gew.-% eines phosphorhaltigen Antioxidationsmittels, wiedergegeben durch die folgende Strukturformel IV: 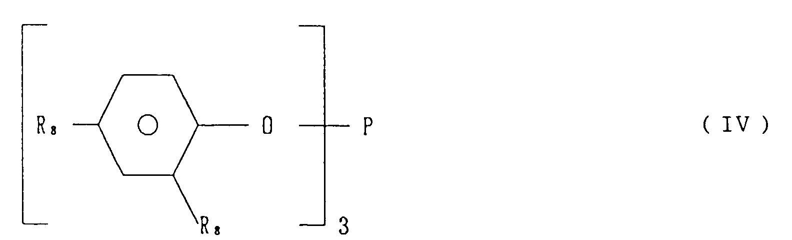 worin R₈ ein Alkyl mit 1 bis 5 Kohlenstoffatomen ist.

2. Gegen Bestrahlung beständige Polypropylenharzzusammensetzung nach Anspruch 1, worin das Polypropylen ein Homopolypropylen ein statistisches Polypropylen oder eine Mischung hieraus ist.

3. Gegen Bestrahlung beständige Polypropylenharzzusammensetzung nach Anspruch 2, worin das statistische Polypropylen 0,5 bis 8,0 Gew.-% Ethylen enthält.

4. Gegen Bestrahlung beständige Polypropylenharzzusammensetzung nach Anspruch 2, welches zusätzlich höchstens 30 Gew.-% eines α-Olefin-Copolymers mit wenigstens 4 Kohlenstoffatomen umfaßt.

5. Gegen Bestrahlung beständige Polypropylenharzzusammensetzung nach Anspruch 1, welches zusätzlich 0,05 bis 1,0 Gew.-% eines durch die folgende Strukturformel V wiedergegebenen Nukleierungsmittels enthält: 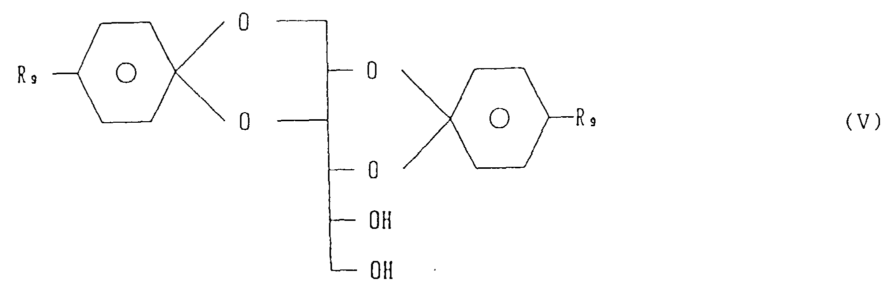 worin R₉ eine Alkylgruppe mit 1 bis 5 Kohlenstoffatomen oder ein halogeniertes Molekül ist.

## Revendications

1. Composition de résine polypropylène résistant aux rayonnements, qui comprend un mélange constitué principalement de:
95 à 99,6% en poids de polypropylène;
0,01 à 2,0% en poids d'un photostabilisateur aminé, représenté par la formule I suivante: 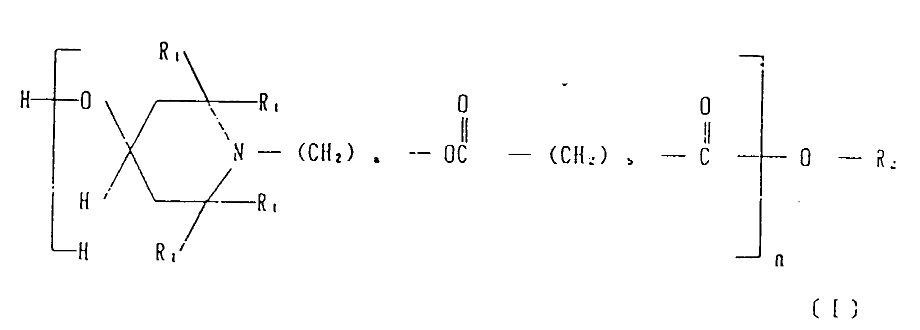 dans laquelle
R₁ et R₂, indépendamment l'un de l'autre, sont un groupe alkyle contenant 1 à 4 atomes de carbone;
a et b peuvent être différents ou identiques, et sont des entiers entre 2 et 5; et
n est un entier entre 5 et 20,
ou la formule structurelle II suivante: 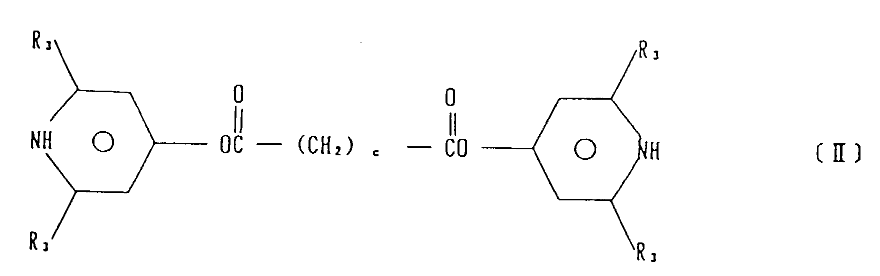 dans laquelle
R₃ est un groupe alkyle contenant 1 à 5 atomes de carbone;
et c est un entier entre 1 et 10;
0,01 à 2,0 % en poids d'un antioxydant phénolique représenté par la formule structurelle III suivante: 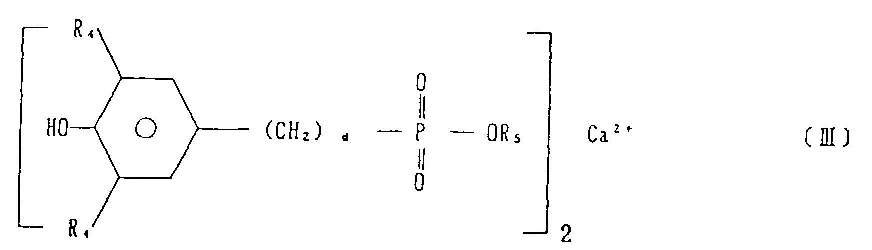 dans laquelle
R₄ est un groupe alkyle contenant 1 à 5 atomes de carbone;
R₅ est un groupe alkyle contenant 2 à 5 atomes de carbone, qui est différent ou identique à R4; et
d est un entier entre 2 et 4, et
0,01 à 1,0% en poids d'un antioxydant phosphoré représenté par la formule structurelle IV suivante: 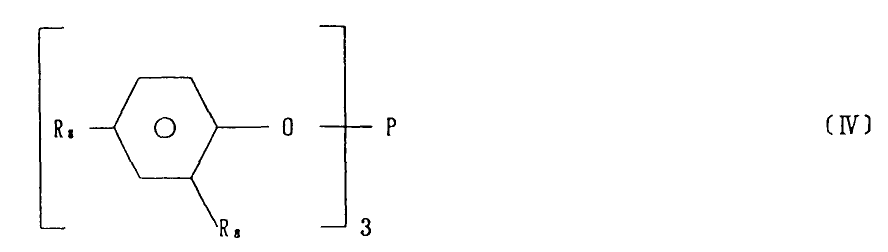 dans laquelle R₈ est un alkyle contenant 1 à 5 atomes de carbone.

2. Composition de résine polypropylène résistant aux rayonnements selon la revendication 1, dans laquelle ledit polypropylène comprend un homopolypropylène, un polypropylène statistique ou le mélange de ceux-ci.

3. Composition de résine polypropylène résistant aux rayonnements selon la revendication 2, dans laquelle ledit polypropylène statistique comprend 0,5 à 8,0% en poids d'éthylène.

4. Composition de résine polypropylène résistant aux rayonnements selon la revendication 2, comprenant encore au plus 30% en poids d'un copolymère d'α-oléfine contenant au moins 4 atomes de carbone.

5. Composition de résine polypropylène résistant aux rayonnements selon la revendication 1, comprenant en outre 0,05 à 1,0% en poids d'un agent de nucléation représenté par la formule structurelle V suivante: 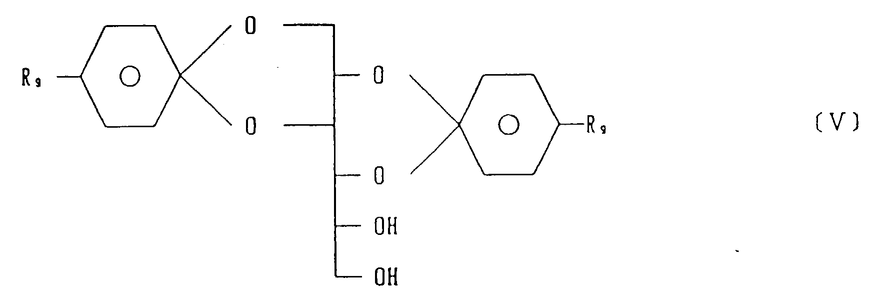 dans laquelle R₉ est un groupe alkyle ccntenant de 1 à 5 atomes de carbone ou une molécule possédant un groupe halogène.
